# EUROPEAN PATENT SPECIFICATION

(11) **EP 1 992 224 B1**
(45) Date of publication and mention of the grant of the patent: **17.09.2014**
(21) Application number: 08380125.8
(22) Date of filing: 29.04.2008
(51) Int. Cl.: A01M 1/02

(54) **Device and process for the detection of biodegradation of wood**
Vorrichtung und Verfahren zur Erkennung der Biodegradierung von Holz
Dispositif et processus pour la détection de biodégradation du bois

(30) Priority: 16.05.2007 ES 200701318
(43) Date of publication of application: 19.11.2008
(73) Proprietor: Asoc. de Investigacion y Desarrollo en la Industria del Mueble y afines (Aidima), 46980 Paterna (Valencia) (ES)
(72) Inventor: Abian Perez, Miguel Angel, 46980 Paterna (ES)
(74) Representative: Ungria López, Javier

(56) References cited:
- JP-A- 10 210 915
- US-A1- 2006 146 908
- US-B1- 7 142 123

## Description

### OBJECT OF THE INVENTION

The invention is intended to generate a warning signal when the presence of an insect is detected and when it is detected that the wood has a moisture content that permits attack by xylophage agents.

The invention is applicable in any sector in which it is wished to detect the biodegradation of wood, primarily in the construction sector in which structural elements are used (beams, purlins, trusses, rafters, ribs, columns, etc.) as well as in non-structural elements (frames, leaves of doors, wooden flooring, windows, stairways, etc.).

Its can be used, for example, for the automatic monitoring of the state of wood, both structural and decorative, in homes and buildings. In this case, by means of its early detection of biodegradation, the invention prevents future costs of repairing or replacing wooden elements, as well as the application of large amounts of insecticides.

### PRIOR ART OF THE INVENTION

Wood being a material of biological origin, it is exposed to attack from xylophage agents, which causes its biodegradation, and given that wood is ever more present in buildings, in both urban and rural areas, so it become more and more necessary to monitor its condition in order to permit the early detection of its biodegradation in such a way that prevents costly chemical treatment from having to be carried out later on or the biodegraded wood from having to be replaced.

Wood is exposed to attack from small insects as cossids, siricids, termitids (such as the subterranean termite or Reticulitermes Lucifugus Rossi), bostrichids, curculionids, lictids (commonly known as moths), anobids (commonly known as furniture beetle), cerambycids (commonly known as deathweatch beetle) escolitics and platipodids. They all feed on wood, such that they reduce its mechanical strength; and many of them attack wood with a moisture content greater than 20%, with the most serious attacks taking place in wood with a high moisture content. Moreover, the wood is also exposed to attack from xylophage fungi such as colour fungi, white rot and brown rot whose spores can be carried on the feet and mandibles of ants and cockroaches. These fungi develop easily when the wood has a moisture content equal to or greater than 20%. Ants and cockroaches also transport the humidity of the soil to the wood, leaving it in a suitable condition for being attacked by xylophage fungi.

As well as a certain minimum moisture content, xylophage fungi also need to a certain temperature to develop, with minimum development taking place at between 3-5°C and the interval between 18 and 28°C being considered as optimum, while at temperatures above 35- 40°C the mycelia usually die.

Colour fungi (whose most common species are Penicillium ssp., Paecillomices variotti, Ceratocystis spp., Pullularia pullulans, Lasiosphaeria pezizula. Torula ligneperda, Hormonema dematioides, Mucor spp., Geotrichium ssp., Ungulina marginata, Ganoderma applanatum, Chlorosplenium aeruginosum, Cladosporium herbarum, Trichoderma lignorum) develop well at temperatures between 5°C and 35°C, and humidities between 20% and 140%. Rot fungi (such as Xylaria hypoxilon Grev., Polystictus versicolor Fr., Merilius lacrymans Wulf., Lenzites betulina Fr., Lentinus lepideus Fr., Poria vaillantii Fr. and Chaetomium globosum Kunz.) affect wood with humidities above 20-35%, and they have their optimum growth at temperatures of 18-28°C.

There currently exist devices for the detection of termites, such as for example that described in document ES 2176706 which refers to a system for monitoring and controlling particular pests such as termites as well as other biotic and non-biotic factors, by means of a system that includes different devices for gathering data which is sent to a central processor for the detection of pests. The detection is carried out when the termite gnaws on an electrical conductor. Or the device disclosed in JP10210915A for directly detecting termites, in order to prevent wooden damage caused by said insects. The device electrically detects an intrusion of a termite capable of causing insect damage to a wooden building, and which sends a detection signal to outside. JP10210915A describes a termite detecting apparatus having a slit formed as In a size that allows termite to pass the slit in an outer wall of a apparatus body, a black colored subject board disposed inside the apparatus body, a light emitting part which emits a white light towards the subject board, and a light receiving part which is disposed on a light path of the white light reflected by the subject board. The technical feature that provides the desired discrimination of the termite from other living matter is that a light reflected by a small living matter which has intruded on the subject board is inputted into the light receiving part, and if an output signal from the light receiving part is equal to or greater than a set value, the termite detecting apparatus determine that the reflected light is white meaning termite and then outputs a detection signal outside. Therefore, this particular device only detects termites because they are white; it does not detect the typical mud tunnels of the termites (mud tunnels or mud tubes), earth-colored and which is the tool used by termites to carry moisture from the ground to the wood, and these tunnels are the main way of termites to look for, detect and attack wood; it neither detects termites inside the wood, which is the more interesting situation to early prevent the biodegradation (termites may be near a wooden structure without attacking it).

These systems do not provide for the detection of xylophage fungi. In the case of the system described in document ES2176706, the detection of termites is not quick, since the first thing that the termites gnaw on is the wood not the cable, so this can be cut when the wood is already weakened.

In this regard, one can also cite the document of Patent EP 0283142 which describes a device that includes a number of detectors distributed in an area under surveillance and connected to an indicator which signals the state of that detector, and which also does not permit detection of xylophage fungi.

Also known is the obtaining of the moisture content of wood starting from the temperature and relative humidity of the air, which is based on the principle that under stable conditions wood tends towards the point of equilibrium in terms of moisture content; this principle states that if the wood is surrounded by air, then it eventually acquires its stable moisture content which depends on the temperature of the air and its relative humidity. This moisture content is known as hygroscopic equilibrium humidity (HEH) or limit humidity; at the HEH, the wood neither gains nor loses humidity.

General relations between the temperature of the air, relative humidity of the air and the HEH can be found in KOLLMAN, F.; COTE, W. A. (Principles of Wood Science and Technology Vol. I. Solid Wood. Spriger-Verlag, New York, 1968) and in SIMPSON W.T. (Equilibrium Moisture Content of Wood in Outdoor Locations in the United States and Worldwide, U.S. Department of Agriculture, Forest Service, Forest Products Laboratory, 1998). These relations can be used to determine the moisture content of the wood under certain ambient conditions.

These relations apply to all species of wood, without taking into account - as stated in SIAUA J.F. (1984). Transport processes in wood. Springer-Verlag, New York - that there exists a certain dependence between the HEH and the species of wood being considered.

Moreover, there does not exist any device that relates the moisture content of the wood to the property that there could exist xylophage agents in it.

### DESCRIPTION OF THE INVENTION

In order to achieve the objectives and solve the drawbacks stated above, the invention has developed a new device and process for detecting the biodegradation of wood in which the device, according to claim 1 as with those provided for in the state of the art, is endowed with a control module connected to at least one detection sensor for insects; and is characterised in that the sensor comprises a light emitter and light detector which generates an electrical signal proportional to the light captured, and which is connected to the control module, in which are included means of detecting small insects on the basis of the electrical signal generated by the light detector, and includes means of generation of a signal indicating when that detection takes place. This detection indicator signal is preferably an alarm signal that is applied to signalling means such as might be optical and/or acoustic. In the preferred embodiment of the invention a buzzer is used to signal an alarm indicating the detection of the presence of an insect.

In the preferred embodiment of the invention the light emitter consists of an LED diode.

The means of detection of small insects of the control module detect the maximum and minimum value of the electrical signal generated by the light detector which, as mentioned earlier, corresponds to the maximum and minimum values of the light captured by the light detector, and they calculate the difference between the two values in order to compare this with a threshold previously established in the control module and generate the alarm when said threshold is exceeded by means of the corresponding alarm generation means.

The invention device also includes a temperature sensor and a relative humidity sensor for the air, which are connected to the control module, and which include means for determining the moisture content of the wood starting from the measured temperature and relative humidity of the air, in order to compare them with a threshold previously stored in the control module and communicate this to the means for generating an alarm signal so that it can generate the corresponding alarm when that threshold is exceeded. In this case, the alarm indicates that the conditions of the wood are suitable for the settlement of xylophage agents, due to the wood having sufficient moisture content for permitting them to settle.

As the inventive device comprises an air temperature sensor, the data on the moisture content of the wood is complemented with the ambient temperature, which allows the device not to send alarm signals unnecessarily when the moisture content is right for the xylophage fungi but the temperatures are too high or low for their development (for example, 1°C or 39°C).

The means for determining the moisture content of the wood starting from the temperature and relative humidity of the air comprise conversion tables for different types of woods.

These tables are based on the principle that, under stable conditions, the wood tends towards the point of hygroscopic equilibrium (HEH) which is related to the temperature and relative humidity of the air. These tables have been adjusted experimentally for each type of wood.

In this way the invention permits the device to be used for any existing wood, preferably those used in construction.

The different elements described above are housed in a casing provided with at least one opening permitting insects to pass inside and which also include a housing for bait in order to attract the insects.

In the preferred embodiment of the invention provision is made for the casing to be inserted in a housing made in the wood and which is blocked up in order to prevent the entrance of air, with the above detections being carried out in that housing. Obviously, these embodiments can be made in gaps, cracks or fissures. It can be stated at this point that the means for determining the moisture content of the wood are also based on the principle that, under stable conditions, the wood tends towards the point of hygroscopic equilibrium (HEH), since if there is a small amount of air within the wood and isolated from the outside this it will tend to acquire a stable moisture content, directly related to the HEH of the wood surrounding it and which, as already mentioned, depends on the temperature and relative humidity of the air.

The invention provides that the casing can also include a slow-acting pesticide which is impregnated in the bait, or in pieces of wood located inside the casing.

Moreover, the control module is also provided with means for generating pulses during a previously established initial period of time, which is interrupted during a second period of time, also previously established, and which is applied to the light emitter in order to carry out the detection of insects as was described, with the first and second periods of time being repeated sequentially. In this way the control module detects the maximum and minimum values of the electrical signal and calculates their difference during each first period of time.

It can also be pointed out that the control module is provided with temperature and electronic noise compensation means, which correct the values obtained during each first period of time.

Consequently, the control module detects the maxima and minima each time the light emitter starts to emit during the first period of time and performs a temperature and electronic noise compensation during that first period of time, in such a way that the device does not need any initial tuning and is insensitive to the aging of the electronics, to small accumulations of dirt in the emitter or in the detector, to thermal drift and to electronic noise. Moreover, the sensor functions adequately even for case in which the insect is present when the first period of time starts, or when the insect is present when the first period of time ends, or even when the insect is moving slowly. All this is done solely by adjusting the maximum and minimum value of the intensity during each first period of time.

At certain intervals of time the control module corrects and stores representative values of the electrical signal (or their arithmetic mean) during a period of time and compares them to the representative values (or to the arithmetic mean of them) of several following first periods of time in order to determine whether there exist any significant differences between them, and if there are it generates a signal indicating that a malfunctioning has occurred between two first periods of time, such as for example the power supply battery has run out or there is an accumulation of residues between the light emitter and detector.

In an embodiment of the invention provision is made for the control module to be connected to an external device to which it sends the said alarms and/or the signal indicating that a malfunctioning has occurred (which can also be an alarm). This external device can be a computer or any other alarm device. To achieve this, the connection from the control module to the alarm device is done by cable or wireless.

The invention furthermore relates to a process which, in a housing made in the wood and which is sealed to prevent the passage of air, provides for the generation of light and the capture of the light reflected in the housing, which varies depending on whether or not there are insects present, and whose value depends on the colour and profile of the insect. The maximum and minimum values of the reflected light are then detected and the difference is calculated between the maximum and minimum value in order to compare the result with a previously established threshold and a signal is generated indicating the detection of the presence of insects in the housing when the established threshold is exceeded.

Moreover, the process also provides for measuring the temperature and relative humidity inside the housing in order, starting from these measurements, to obtain the moisture content of the wood and compare this with a previously established threshold, in order to generate a signal indicating that the conditions in the wood are suitable for the settlement of xylophage agents.

The process also provides for considering both the moisture content of the wood and the temperature of the air in order to reject situations in which, although the moisture content of the wood might permit the development of xylophage agents, the air temperature would prevent this.

The signal indicating the detection of the presence of insects in the housing and the signal indicating that the conditions in the wood are suitable for the settlement of xylophage agents is an alarm signal that can be acoustic, optical or both.

Consequently, by means of the invention the early detection of biodegradation of the wood is made possible.

Below, in order to facilitate a better understanding of this descriptive specification and forming an integral part thereof, a series of figures are attached in which, by way of illustration and not limiting, the object of the invention has been represented.

### BRIEF DESCRIPTION OF THE FIGURES

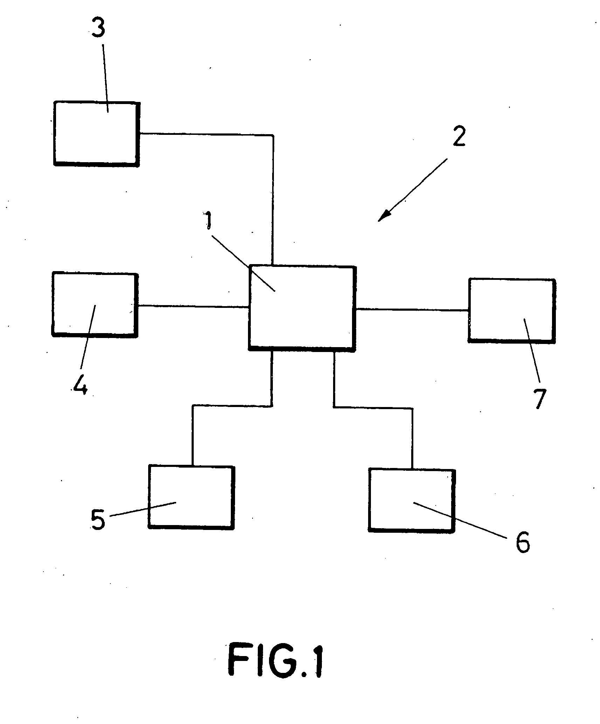

**Figure 1****.-** Shows a functional block diagram of the electronic circuitry included in the inventive device.

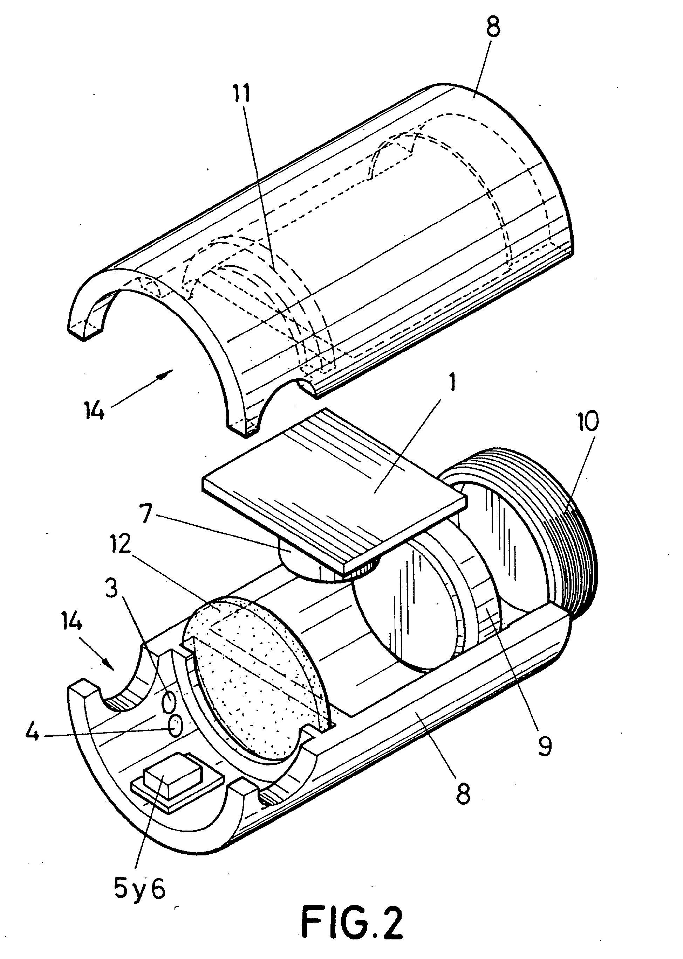

**Figure 2****.-** Shows a view in exploded perspective of the inventive device.

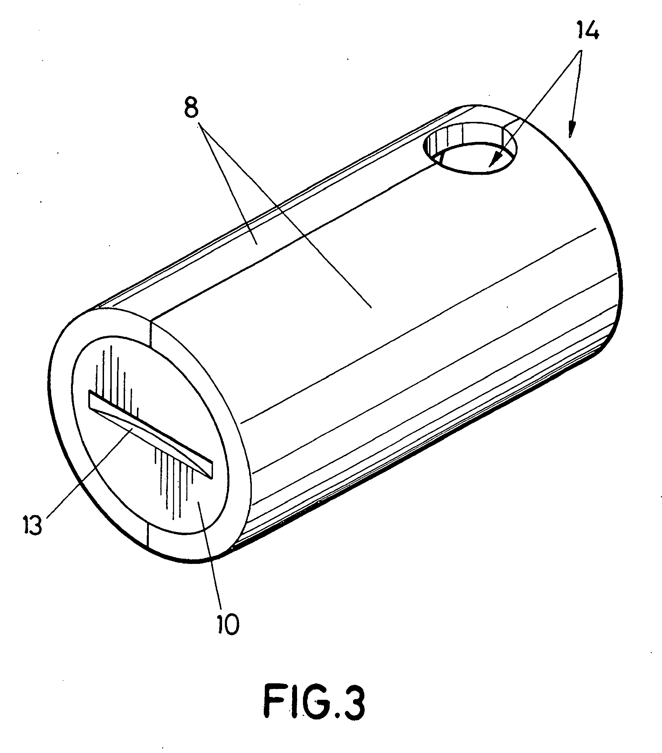

**Figure 3****.-** Shows a view in perspective of the device of the previous figure assembled.

### DESCRIPTION OF THE PREFERRED FORM OF EMBODIMENT

Given below is a description of the invention based on the figures mentioned above.

The inventive device comprises a control module 1 connected to a sensor 2 consisting of a light emitter 3 and a light detector 4 which generates a voltage proportional to the captured light and sends it to the control module for processing as will be described further below.

The control module 1 is furthermore connected to a temperature meter 5 and to a relative humidity meter for the air 6 as well as a buzzer 7 via which the different alarms that are produced are signalled, as will be described.

All the described elements are to be found housed in a casing 8 which includes the corresponding power supply battery 9 for the electronics described above, and which includes in its rear part a cover 10 permitting access to the inside of the casing 8 in order to replace the battery 9.

The casing 8 furthermore comprises certain openings 14 via which insects are allowed to pas to its interior.

The casing 8 together with the all the described elements are inserted in a housing made in the wood, which is blocked by means of a metal sheet that produces its hermetic sealing in such a way that air is prevented from passing to the interior of the housing.

El light emitter 3 consists of an LED diode which is fed via the control module 1, which comprises means for generating pulses during a previously established first period of time, which is interrupted during a second period of time, likewise pre-established, with the two periods being repeated sequentially and which are applied to the light emitter 3, such that the LED diode emits pulses of light of about 400 microseconds, with the aim of not disturbing the insects which might become introduced into the casing 8 via the openings 14.

The light detector 4 comprises a converter for the light into a voltage which captures the light from the LED reflected off the inside walls of the casing 8. The light detector 4 has a high sensitivity since it works in the dark and its angle of vision is 120°, which permits it to detect insects in a wide zone of the sensor 2.

In this way, the LED emits pulses during the first periods of time, for example 15 minutes, and then remains inactive during the second period of time, for example 1 hour. During the time the LED emits, the reflected light is captured by the detector 4 in such a way that the control module 1 receives the voltage proportional to the captured light. The control module 1 comprises means for carrying out the detection of small insects starting from the voltage provided by the light detector 4 and means for generating an alarm signal which is applied to the buzzer 7. The detection is done in the manner described below.

With first each period, the means of detection of small insects of the control module calculate the maximum and minimum value of the voltages received and calculate the difference between the maximum and minimum value during the first period of time and they also carry out the temperature and electronic noise compensation of the measured values.

If the difference between the maximum and minimum exceeds a threshold value previously stored in the control module 1, it generates the alarm indicating that an insect has passed by the sensor and it restarts the calculation of minima and maxima.

The maximum and minimum value of the voltage varies according to the insect. If, for example, it is a white insect such as a termite, there will be a maximum, since it reflects the light from the LED. If, on the other hand, the insect is black, such as an ant, it will have a minimum since it absorbs a large part of the light from the LED.

In this way, the invention allows the presence of insects to be detected that could affect the integrity of the wood.

In order to attract insects to the inside of the casing 8, the invention provides a housing 11 containing some bait 12, such as a cellulose disc, which can also be impregnated with a slow-acting pesticide, so that the insects that ingest it are not immediately killed and can allow the pesticide to spread through the colony. A greater amount of pesticide can be made available to termites and other insects by locating fine pieces of wood impregnated with pesticide inside the casing, such as for example on the plate of the control module 1.

Moreover, during each first period of time the control module corrects and stores representative values of the voltage and compares them to the representative values taken during the following first period of time in order to determine whether, during the time that has passed between the two first periods of time, any malfunctioning has taken place such as the battery 9 running out or the accumulation of residues between the light emitter 3 and the light detector 4. These residues can be insects that have died inside the casing, remains of wood, etc.

The control module also includes means for determining the moisture content of the wood starting from the measured temperature and relative humidity of the air, these means consisting of a table, obtained in the conventional way, and experimentally checked, and which is stored in the control module. This table depends on the type of wood, so there exists a table for the different woods. The values obtained of the moisture content of the wood are compared with a threshold established in the control module, such that if this threshold is exceeded an alarm is generated which is sent to the buzzer 7. In this case the moisture content threshold is set at being 20%, a level that is sufficient for xylophage fungi which, for example, can be carried by ants and cockroaches on their feet and mandibles, and can settle and spread inside the wood. Ants and cockroaches can also transport humidity which they pass on to the wood.

If the control module detects that the moisture content of the wood exceeds the established threshold, but the temperature of the air prevents the development of xylophage agents, then it does not generate the alarm.

Consequently, the invention allows for early detection of the possible degradation of the wood, since on the one hand the presence is detected of small insects such as termites and beetles, and at the same time the presence is detected of insects such as ants and cockroaches which can transport humidity and spores of xylophage fungi which propagate in the wood when it has a certain moisture content, which is previously detected by the inventive device thereby preventing the wood from being able to suffer damage.

The invention can be applied, for example, for the automatic monitoring of the state of wood, both structural and decorative, in homes and buildings. In this case, by means of its early detection of biodegradation, the invention prevents future costs of repairing or replacing wooden elements, as well as the application of large amounts of insecticides.

## Claims

1. **DEVICE FOR THE DETECTION OF BIODEGRADATION** OF **WOOD,** which comprises a control module connected to at least one detection sensor for insects(2) which comprises a light emitter (3) and a light detector (4) which generates an electrical signal proportional to the light captured and which is connected to the control module (1), which includes means of detection of small insects starting from the electrical signal generated by the light detector (4), and means of generation of a signal indicating when that detection takes place; wherein
the means of detection of small insects of the control module (1) detect the maximum and minimum value of the electrical signal generated by the light detector (4), corresponding to the maximum and minimum values of the light captured by the light detector (4), and they calculate the difference between the two values, in order to compare this with a threshold value previously established in the control module (1) and generate the signal indicating the presence of insects, when that threshold is exceeded, **characterised in that** said device includes a temperature sensor (5) and a relative humidity sensor of the air (6) which are connected to the control module (1), which is provided with means for determining the moisture content of the wood on the basis of the measured temperature and relative humidity of the air, in order to compare them with a threshold previously stored in the control module (1) and generate a signal indicating that the conditions in the wood are suitable for the settlement of xylophage agents, when that threshold is exceeded.

2. **DEVICE FOR THE DETECTION OF BIODEGRADATION OF WOOD,** according to claim 1, **characterised in that** the signal indicating the detection of insects and the signal indicating that the conditions in the wood are suitable for the settlement of xylophage agents is an alarm signal.

3. **DEVICE FOR THE DETECTION OF BIODEGRADATION OF WOOD,** according to claim 1, **characterised in that** the means for determining the moisture content of the wood based on the measured temperature and relative humidity of the air comprise conversion tables for the different types of wood,

4. **DEVICE FOR THE DETECTION OF BIODEGRADATION OF WOOD,** according to claim 1, **characterised in that** the electrical signal generated by the light detector is a voltage value.

5. **DEVICE FOR THE DETECTION OF BIODEGRADATION OF WOOD,** according to claim 2, **characterised in that** the alarm generated is signalled by means selected from among acoustic, optical and combination thereof.

6. **DEVICE FOR THE DETECTION OF BIODEGRADATION OF WOOD,** according to claim 5, **characterised in that** the acoustic means comprise a buzzer (7) connected to the control module (1).

7. **DEVICE FOR THE DETECTION OF BIODEGRADATION OF WOOD,** according to the above claims, **characterised in that** it comprises a casing (8) provided with at least one opening (14) via which insects are allowed to pass to its interior, in which interior there is housed at least the sensor (2), temperature meter (5), humidity meter (6), control module (1) and buzzer (7).

8. **DEVICE FOR THE DETECTION OF BIODEGRADATION OF WOOD,** according to claim 7, **characterised in that** the casing comprises a housing (11) for an insect bait (12).

9. **DEVICE FOR THE DETECTION OF BIODEGRADATION OF WOOD,** according to claims 7 or 8, **characterised in that** it comprises a slow-acting pesticide which is selectively impregnated in the bait (12), in fine pieces of wood housed in the casing (8) and combination thereof.

10. **DEVICE FOR THE DETECTION OF BIODEGRADATION OF WOOD,** according to claim 1, **characterised in that** the control module comprises means for generating pulses during a first period of time which is interrupted during a second period of time, both previously established, and which are applied to the light emitter (3) in order to detect the maximum and minimum value of the electrical signal and calculate their difference during each first period of time; said first and second periods of time being repeated sequentially.

11. **DEVICE FOR THE DETECTION OF BIODEGRADATION OF WOOD**, according to claim 9, **characterised in that** the control module comprises temperature and electronic noise compensation means which correct the values obtained during each first period of time,

12. **DEVICE FOR THE DETECTION OF BIODEGRADATION OF WOOD,** according to claim 11, **characterised in that** the control module corrects and stores representative values of the electrical signal and compares them to those of the following first period of time in order to determine whether there exists any difference between them, and if so it generates a signal indicating that during the time passed between two first periods of time a malfunctioning has taken place, selected between the power supply battery (9) running out or the accumulation of residues between the light emitter (3) and the light detector (4).

13. **DEVICE FOR THE DETECTION OF BIODEGRADATION OF WOOD,** according to claims 7 or 12, **characterised in that** the control module (1) is connected, by means of a connection selected between wireless and a connection via cable, to a device external to the casing (8), which is selected from between a computer and an alarm device, for the sending of the alarm signal.

14. **PROCESS FOR THE DETECTION OF BIODEGRADATION OF WOOD** comprising in a housing made in the wood and sealed to prevent the passage of air, generating light, capturing the light reflected in the housing, detecting the maximum and minimum values of the reflected light, calculating the difference between the maximum and minimum value and comparing the result with a previously established threshold for generating a signal indicating the detection of the presence of insects in the housing when the established threshold is exceeded, **characterized in that** it comprises measuring the temperature and relative humidity inside the housing in order, on the basis of these measurements, to obtain the moisture content of the wood and compare it with a previously established threshold, in order to generate a signal indicating that the conditions in the wood are suitable for the settlement of xylophage agents.

15. **PROCESS FOR THE DETECTION OF BIODEGRADATION OF WOOD,** according to claim 14, **characterised in that** the signal indicating the detection of the presence of insects in the housing and the signal indicating that the conditions in the wood are suitable for the settlement of xylophage agents is an alarm signal, selected from among acoustic, optical and combination thereof.

## Patentansprüche

1. Vorrichtung für die Erfassung von biologischem Abbau von Holz, die ein Steuermodul umfasst, das mit wenigstens einem Erfassungssensor für Insekten (2) verbunden ist, der eine Licht-Emissionseinrichtung (3) sowie eine Licht-Erfassungseinrichtung (4) umfasst, die ein elektrisches Signal erzeugt, das proportional zu dem erfassten Licht ist, und die mit dem Steuermodul (1) verbunden ist, das eine Einrichtung zum Erfassen kleiner Insekten, ausgehend von dem durch die Licht-Erfassungseinrichtung (4) erzeugten elektrischen Signal, sowie eine Einrichtung zum Erzeugen eines Signals enthält, das anzeigt, wann diese Erfassung stattfindet, wobei
die Einrichtung zum Erfassen kleiner Insekten des Steuermoduls (1) den Maximal- und den Minimalwert des durch die Licht-Erfassungseinrichtung (4) erzeugten elektrischen Signals erfasst, die dem Maximal- und dem Minimalwert des durch die Licht-Erfassungseinrichtung (4) erfassten Lichtes entsprechen, und die Differenz zwischen den zwei Werten berechnet, um diese mit einem zuvor in dem Steuermodul (1) festgelegten Schwellenwert zu vergleichen, und das Signal erzeugt, das das Vorhandensein von Insekten anzeigt, wenn dieser Schwellenwert überschritten wird,
**dadurch gekennzeichnet, dass**
die Vorrichtung einen Temperatursensor (5) sowie einen Sensor (5) für relative Luftfeuchtigkeit enthält, die mit dem Steuermodul (1) verbunden sind, das mit einer Einrichtung zum Bestimmen des Feuchtigkeitsgehaltes des Holzes auf Basis der gemessenen Temperatur und der relativen Luftfeuchtigkeit versehen ist, um diese mit einem zuvor in dem Steuermodul (1) gespeicherten Schwellenwert zu vergleichen und ein Signal zu erzeugen, das anzeigt, dass die Bedingungen in dem Holz geeignet für die Besiedelung mit Xylophagen sind, wenn dieser Schwellenwert überschritten wird.

2. Vorrichtung für die Erfassung von biologischem Abbau von Holz nach Anspruch 1,
**dadurch gekennzeichnet, dass**
das Signal, das die Erfassung von Insekten anzeigt, und das Signal, das anzeigt, dass die Bedingungen in dem Holz für die Besiedelung mit Xylophagen geeignet sind, ein Warnsignal sind.

3. Vorrichtung für die Erfassung von biologischem Abbau von Holz nach Anspruch 1,
**dadurch gekennzeichnet, dass**
die Einrichtung zum Bestimmen des Feuchtigkeitsgehaltes in dem Holz auf Basis der gemessenen Temperatur sowie der relativen Luftfeuchtigkeit Umwandlungstabellen für die verschiedenen Holzarten umfasst.

4. Vorrichtung für die Erfassung von biologischem Abbau von Holz nach Anspruch 1,
**dadurch gekennzeichnet, dass**
das durch die Licht-Erfassungseinrichtung erzeugte elektrische Signal ein Spannungswert ist.

5. Vorrichtung für die Erfassung von biologischem Abbau von Holz nach Anspruch 2,
**dadurch gekennzeichnet, dass**
die erzeugte Warnung mit Einrichtungen signalisiert wird, die aus akustischen und optischen Einrichtungen sowie einer Kombination derselben ausgewählt werden.

6. Vorrichtung für die Erfassung von biologischem Abbau von Holz nach Anspruch 5,
**dadurch gekennzeichnet, dass**
die akustische Einrichtung einen mit dem Steuermodul (1) verbundenen Summer (7) umfasst.

7. Vorrichtung für die Erfassung von biologischem Abbau von Holz nach einem der vorangehenden Ansprüche,
**dadurch gekennzeichnet, dass** sie ein Gehäuse (8) umfasst, das mit wenigstens einer Öffnung (14) versehen ist, über die Insekten in seinen Innenraum gelangen können, wobei in dem Innenraum wenigstens der Sensor (2), die Temperatur-Messeinrichtung (5), die Feuchtigkeits-Messeinrichtung (6), das Steuermodul (1) und der Summer (7) aufgenommen sind.

8. Vorrichtung für die Erfassung von biologischem Abbau von Holz nach Anspruch 7,
**dadurch gekennzeichnet, dass**
das Gehäuse eine Aufnahme (11) für einen Insektenköder (12) umfasst.

9. Vorrichtung für die Erfassung von biologischem Abbau von Holz nach Anspruch 7 oder 8,
**dadurch gekennzeichnet, dass** sie ein langsam wirkendes Pestizid, mit dem der Köder (12) selektiv imprägniert ist, in feinen Holzstücken, die in dem Gehäuse (8) aufgenommen sind, und eine Kombination daraus umfasst.

10. Vorrichtung für die Erfassung von biologischem Abbau von Holz nach Anspruch 1,
**dadurch gekennzeichnet, dass**
das Steuermodul eine Einrichtung zum Erzeugen von Impulsen während eines ersten Zeitraums, das während eines zweiten Zeitraums unterbrochen wird, die beide im Voraus festgelegt werden, und die Impulse an die Licht-Emissionseinrichtung (3) angelegt werden, um den Maximal- und den Minimalwert des elektrischen Signals zu erfassen und ihre Differenz während jedes ersten Zeitraums zu berechnen, wobei der erste und der zweite Zeitraum sequentiell wiederholt werden.

11. Vorrichtung für die Erfassung von biologischem Abbau von Holz nach Anspruch 9,
**dadurch gekennzeichnet, dass**
das Steuermodul Einrichtungen zum Kompensieren von Temperatur und elektronischem Rauschen umfasst, die die während jedes ersten Zeitraums gewonnenen Werte korrigieren.

12. Vorrichtung für die Erfassung von biologischem Abbau von Holz nach Anspruch 11,
**dadurch gekennzeichnet, dass**
das Steuermodul repräsentative Werte des elektrischen Signals korrigiert und speichert und sie mit denen des folgenden ersten Zeitraums vergleicht, um festzustellen, ob eine Differenz zwischen ihnen vorliegt, und, wenn dies der Fall ist, ein Signal erzeugt, das anzeigt, dass während der Zeit, die zwischen zwei ersten Zeiträumen vergangen ist, eine Fehlfunktion aufgetreten ist, die aus Entleerung der Stromversorgungsbatterie (9) und der Ansammlung von Rückständen zwischen der Licht-Emissionseinrichtung (3) und der Licht-Erfassungseinrichtung (4) ausgewählt wird.

13. Vorrichtung für die Erfassung von biologischem Abbau von Holz nach Anspruch 7 oder 12,
**dadurch gekennzeichnet, dass**
das Steuermodul (1) über eine Verbindung, die aus Drahtlos-Verbindung und einer Verbindung über Kabel ausgewählt wird, mit einer Vorrichtung außerhalb des Gehäuses (8) zum Senden des Warnsignals verbunden ist, die aus einem Computer und einer Warnvorrichtung ausgewählt wird.

14. Verfahren für die Erfassung von biologischem Abbau von Holz, das umfasst, dass in einer Aufnahme, die in dem Holz ausgebildet und abgeschlossen ist, um das Eintreten von Luft zu verhindern, Licht erzeugt wird, das in der Aufnahme reflektierte Licht erfasst wird, der Maximal- und der Minimalwert des reflektierten Lichtes erfasst werden, die Differenz zwischen dem Maximal- und dem Minimalwert berechnet wird und das Ergebnis mit einem zuvor festgelegten Schwellenwert verglichen wird, um ein Signal zu erzeugen, das die Erfassung des Vorhandenseins von Insekten in der Aufnahme anzeigt, wenn der festgelegte Schwellenwert überschritten wird,
**dadurch gekennzeichnet, dass**
es umfasst, dass die Temperatur und relative Luftfeuchtigkeit im Inneren der Aufnahme gemessen werden, um auf Basis dieser Messungen den Feuchtigkeitsgehalt des Holzes zu ermitteln, ihn mit einem zuvor festgelegten Schwellenwert zu vergleichen und ein Signal zu erzeugen, das anzeigt, dass die Bedingungen in dem Holz für die Besiedelung mit Xylophagen geeignet sind.

15. Verfahren für die Erfassung von biologischem Abbau von Holz nach Anspruch 14,
**dadurch gekennzeichnet, dass** das Signal, das die Erfassung des Vorhandenseins von Insekten in der Aufnahme anzeigt, und das Signal, das anzeigt, dass die Bedingungen in dem Holz für die Besiedelung mit Xylophagen geeignet sind, ein Warnsignal sind, das aus einem akustischen und einem optischen Signal sowie einer Kombination daraus ausgewählt wird.

## Revendications

1. Dispositif pour la détection de biodégradation du bois, comprenant un module de contrôle raccordé à au moins un capteur de détection pour insectes (2) qui comprend un émetteur de lumière (3) et un détecteur de lumière (4) qui génère un signal électrique proportionnel à la lumière capturée et qui est raccordé au module de contrôle (1), qui comprend des moyens de détection de petits insectes à partir du signal électrique généré par le détecteur de lumière (4) et des moyens de génération d'un signal indiquant le moment où la détection a lieu ; dans lequel :
les moyens de détection de petits insectes du module de contrôle (1) détectent les valeurs maximum et minimum du signal électrique généré par le détecteur de lumière (4), correspondant aux valeurs maximum et minimum de la lumière capturée par le détecteur de lumière (4) et ils calculent la différence entre les deux valeurs, afin de comparer cette dernière avec une valeur de seuil préalablement établie dans le module de contrôle (1) et générer le signal indiquant la présence d'insectes, lorsque ce seuil est dépassé, **caractérisé en ce que** :
ledit dispositif comprend un capteur de température (5) et un capteur d'humidité relative de l'air (6) qui sont raccordés au module de contrôle (1) qui est doté de moyens pour déterminer la teneur en humidité du bois en fonction de la température mesurée et de l'humidité relative de l'air, afin de les comparer avec un seuil préalablement mémorisé dans le module de contrôle (1) et générer un signal indiquant que les conditions dans le bois sont appropriées pour la colonisation par des agents xylophages, lorsque ce seuil est dépassé.

2. Dispositif pour la détection de biodégradation du bois selon la revendication 1, **caractérisé en ce que** le signal indiquant la détection d'insectes et le signal indiquant que les conditions dans le bois sont appropriées pour la colonisation par des agents xylophages est un signal d'alarme.

3. Dispositif pour la détection de biodégradation du bois selon la revendication 1, **caractérisé en ce que** les moyens pour déterminer la teneur en humidité du bois en fonction de la température mesurée et de l'humidité relative de l'air comprennent des tableaux de conversion pour les différents types de bois.

4. Dispositif pour la détection de biodégradation du bois selon la revendication 1, **caractérisé en ce que** le signal électrique généré par le détecteur de lumière est une valeur de tension.

5. Dispositif pour la détection de biodégradation du bois selon la revendication 2, **caractérisé en ce que** l'alarme générée est signalée par des moyens sélectionnés parmi des moyens acoustiques, optiques et leur combinaison.

6. Dispositif pour la détection de biodégradation du bois selon la revendication 5, **caractérisé en ce que** les moyens acoustiques comprennent une sonnette (7) raccordée au module de contrôle (1).

7. Dispositif pour la détection de biodégradation du bois selon les revendications ci-dessus, **caractérisé en ce qu'**il comprend un boîtier (8) prévu avec au moins une ouverture (14) grâce à laquelle les insectes sont autorisés à passer dans son intérieur, dans lequel intérieur, est logé au moins le capteur (2), le thermomètre (5), l'hygromètre (6), le module de contrôle (1) et la sonnette (7).

8. Dispositif pour la détection de biodégradation du bois selon la revendication 7, **caractérisé en ce que** le boîtier comprend un logement (11) pour un appât d'insecte (12).

9. Dispositif pour la détection de biodégradation du bois selon les revendications 7 ou 8, **caractérisé en ce qu'**il comprend un pesticide à action lente qui est sélectivement imprégné dans l'appât (12), dans de fins morceaux de bois logés dans le boîtier (8) et ses combinaisons.

10. Dispositif pour la détection de biodégradation du bois selon la revendication 1, **caractérisé en ce que** le module de contrôle comprend des moyens pour générer des impulsions pendant une première période de temps qui est interrompue pendant une seconde période de temps, les deux préalablement établies, et qui sont appliquées sur l'émetteur de lumière (3) afin de détecter les valeurs maximum et minimum du signal électrique et calculer leur différence pendant chaque première période de temps ; lesdites première et seconde périodes de temps étant répétées en séquence.

11. Dispositif pour la détection de biodégradation du bois selon la revendication 9, **caractérisé en ce que** le module de contrôle comprend des moyens de compensation de température et de bruit électroniques qui corrigent les valeurs obtenues pendant chaque première période de temps.

12. Dispositif pour la détection de biodégradation du bois selon la revendication 11, **caractérisé en ce que** le module de contrôle corrige et mémorise des valeurs représentatives du signal électrique et les compare à celles de la première période de temps suivante afin de déterminer s'il existe des différences entre elles, et si oui, il génère un signal indiquant que pendant le temps passé entre les deux premières périodes de temps, un dysfonctionnement a eu lieu, choisi parmi la panne de la batterie d'alimentation d'énergie (9) ou l'accumulation de résidus entre l'émetteur de lumière (3) et le détecteur de lumière (4).

13. Dispositif pour la détection de biodégradation du bois selon les revendications 7 ou 12, **caractérisé en ce que** le module de contrôle (1) est raccordé, au moyen d'un raccordement choisi entre un raccordement sans fil ou un raccordement via un câble, à un dispositif externe au boîtier (8), qui est choisi entre un ordinateur et un dispositif d'alarme, pour l'envoi du signal d'alarme.

14. Procédé pour la détection de biodégradation du bois comprenant, dans un logement réalisé dans le bois et étanche pour empêcher le passage de l'air, les étapes consistant à générer de la lumière, capturer la lumière reflétée dans le logement, détecter les valeurs maximum et minimum de la lumière reflétée, calculer la différence entre les valeurs maximum et minimum et comparer le résultat avec un seuil préalablement établi pour générer un signal indiquant la détection de la présence d'insectes dans le boîtier lorsque le seuil établi est dépassé, **caractérisé en ce qu'**il comprend l'étape consistant à mesurer la température et l'humidité relative à l'intérieur du logement afin de, en fonction de ces mesures, obtenir la teneur en humidité du bois et la comparer avec un seuil préalablement établi, afin de générer un signal indiquant que les conditions dans le bois sont appropriées pour la colonisation par des agents xylophages.

15. Procédé pour la détection de biodégradation du bois selon la revendication 14, **caractérisé en ce que** le signal indiquant la détection de la présence d'insectes dans le logement et le signal indiquant que les conditions dans le bois sont appropriées pour la colonisation par des agents xylophages est un signal d'alarme, choisi parmi un signal acoustique, un signal optique et leur combinaison.
